(19) **Europäisches Patentamt / European Patent Office / Office européen des brevets**

(11) **EP 1 947 810 B1**

(12) **EUROPEAN PATENT SPECIFICATION**

(45) Date of publication and mention
of the grant of the patent:
**02.06.2010 Bulletin 2010/22**

(21) Application number: **06805085.5**

(22) Date of filing: **27.10.2006**

(51) Int Cl.:
**H04L 12/56** *(2006.01)*

(86) International application number:
**PCT/CN2006/002880**

(87) International publication number:
**WO 2007/048350 (03.05.2007 Gazette 2007/18)**

(54) **A METHOD AND EQUIPMENT FOR ADMITTING AND CONTROLLING THE INTEGRATION SERVICE MODEL**

VERFAHREN UND GERÄTE ZUM ZULASSEN UND STEUERN DES INTEGRATIONSDIENSTEMODELLS

MÉTHODE ET ÉQUIPEMENT D ADMISSION ET DE CONTRÔLE DU MODÈLE DE SERVICE D INTÉGRATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.10.2005 CN 200510116784**

(43) Date of publication of application:
**23.07.2008 Bulletin 2008/30**

(73) Proprietors:
• **Shanghai Jiao Tong University**
  **Shanghai 200030 (CN)**
• **Huawei Technologies Co., Ltd.**
  **Longgang District, Shenzhen**
  **Guangdong 518129 (CN)**

(72) Inventors:
• **ZHAO, Jun**
  **Shenzhen**
  **Guangdong 518129 (CN)**
• **GUO, Yong**
  **Shenzhen**
  **Guangdong 518129 (CN)**
• **FAN, Ge**
  **Shenzhen**
  **Guangdong 518129 (CN)**
• **YU, Hui**
  **Shenzhen**
  **Guangdong 518129 (CN)**

• **HUI, Yanjiao**
  **Shenzhen**
  **Guangdong 518129 (CN)**
• **REN, Ying**
  **Shenzhen**
  **Guangdong 518129 (CN)**

(74) Representative: **Thun, Clemens**
**Mitscherlich & Partner**
**Patent- und Rechtsanwälte**
**Sonnenstrasse 33**
**80331 München (DE)**

(56) References cited:
EP-A- 1 217 793          EP-A- 1 292 054
WO-A-2004/004212     WO-A2-2004/004212
CN-A- 1 581 790         JP-A- 2002 135 329
KR-A- 20050 099 241   US-A1- 2003 148 768
US-A1- 2005 175 014   US-A1- 2005 175 014

• SIEW C-K ET AL: "Multiservice provisioning mechanism with service curves assurance for per-class scheduling delay guarantees" IEE PROCEEDINGS : COMMUNICATIONS, INSTITUTION OF ELECTRICAL ENGINEERS, GB, vol. 153, no. 6, 1 December 2006 (2006-12-01), pages 846-855, XP006027584 ISSN: 1350-2425

**Description**

**Field of the Invention**

The present disclosure relates to the field of network communication technologies, and in particular to a method and apparatus for performing an admission control over the Integrated Service Model.

**Background of the Invention**

The Integrated Service Model is a data processing model for network exchange nodes, which is presented by the Internet Engineers Task Force (IETF). Its fundamental idea is to reserve network resources before transferring data, in accordance with Quality of Service (QoS) demands of services, so as to guarantee the end-to-end QoS for the data transfer.

The Integrated Service Model mainly includes a classifier, a scheduler, and an admission control. The classifier classifies input data packets into classes according to the connections to which the data packets belong. The scheduler executes a packet scheduling process, forwarding all the data packets of the same class in the same manner. The admission control is executed during the establishment of the connection to determine whether the node has sufficient resources to admit the new connection: if the node has sufficient resources, a connection is established and allocated sufficient resource; if the node does not have sufficient resources, a connection is rejected. The admission control is one of the key technologies in the Integrated Service Model.

In the prior art, a method for performing an admission control for the Integrated Service Model is provided. To be specific, it is a method based on measurement, that is, to measure the data flow load of the node in real time, and determine whether the node can admit a new connection in accordance with the results of the measurement. This method includes two primary parts: the measuring part, which is used to measure the data flow load of the network, and the determining part, which is used to determine whether the node is able to admit the new connection. The algorithms for these two parts may vary with different methods to execute the admission control.

At present, the conventional methods for admission control based on measurement are as follows.

Sum value method: measure the network load with time window method, and use the sum of the network load and the leaky bucket rate as the decision variable. If the decision variable is less than the result of the network bandwidth multiplying the target utilization ratio, the node is deemed as able to admit a new connection; otherwise, the new connection is rejected.

Hoeffding bound method: measure the equivalent bandwidth of the network using the Hoeffding bound, and use the sum of the equivalent bandwidth and the peak value of the transmission rate as the decision variable. If the decision variable is less than the result of the network bandwidth multiplying the target utilization ratio, the node is deemed as able to admit the new connection; otherwise, the new connection is rejected.

Tangent peak value method: measure the network load with the time point method, and use $n\ p\ (1 - e^{-sp}) + e^{-sp}\ \hat{v}$ as the decision variable, where n is the number of connections to be admitted; p is the peak value of the transmission rate; s is the spatial parameter of the Chernoff bound, and $\hat{v}$ is the network load measured. If the decision variable is less than the total bandwidth of the network, the node will be deemed as able to admit the new connection; otherwise, the new connection is rejected.

Because the above method for admission control is based on measurement, there are some defects in it, as below:

Because data flow load at a node is a random value, a measurement data in the past does not necessarily correspond to the future conditions, and thus the measurement data on which these methods are based may not be accurate.

These methods cannot guarantee the QoS in the worst condition (e.g. all the services burst out together with their maximum transmission rates).

In the prior art, another method for performing admission control for Integrated Service Model is also provided. To be specific, it is an admission control method based on parameters, that is, use the parameters of data flow that are appointed during the establishment or renegotiation period of the connection, rather than the load of data flow acquired in real time, as the basis, to determine whether the node is able to admit a new connection or not. This method usually allocate bandwidth for new connections according to its maximum data flow, thus is able to guarantee the QoS of the connection at any time (so long as it is not against the restriction of the parameters). The method includes a plurality of algorithms for calculating the suitable bandwidth, shown as below.

An easier way of calculation is to assume $r = \max\{\sigma/d, \rho\}$ as the bandwidth to be allocated for the new connection, where σ and ρ are leaky bucket parameters of the new connection, and d is the delay requirement of the new connection. If the available bandwidth of the node is less than r, the connection is rejected. The method calls for very little calculation amount, but the utilization ratio of the network bandwidth is rather low when dealing with services with low transmission rate and time delay (such as voice service).

When taking into consideration the statistical multiplexing effect of the bandwidth, there is another algorithm with a higher utilization ratio of bandwidth, which includes the following primary steps.

Step 1: Initialize the appointed parameters for the data flow.

Step 2: Allocate bandwidth to each connection without a determined bandwidth, and determine which of them have bandwidths that can not be further reduced during later iterative (that is, the bandwidth is determined), and which of them have bandwidths that can be further reduced (that is, the bandwidth is not determined).

Step 3: Find the first connection whose backlog is cleared, and the surplus bandwidth from this connection will be used by other connections in later iterations.

Step 4: If there are still connections without a determined bandwidth, and determine that the sum of the determined bandwidths is less than the bandwidth of the scheduler, continue the iteration by going back to step 2.

Step 5: If the sum of the bandwidths of all connections is greater than the bandwidth of the scheduler, the new connection is rejected.

Step 6: If the difference between the total bandwidth of all connections and the scheduler's bandwidth is less than a preset value, the new connection is admitted; otherwise, the bandwidth of the scheduler is reduced, restart the iteration by going back to step 1.

It can be seen that the above method for admission control based on parameters has a defect. Although this method has a relatively high bandwidth efficiency, its time for calculation is in direct ratio to the square value of the number of connections, thereby lacking extendibility. In other words, this method is based on connections, so it needs to allocate bandwidth to every connection, which makes it hard for this method to have a good performance simultaneously in both calculation time and bandwidth efficiency in practical implementation.

Paper by D. Nandita et al. titled "Optimal Call Admission Control in Generalized Processor Sharing (GPS) Schedulers". IEEE INFOCOM , pp. 468-477, 2001, discloses an optimal CAC algorithm for a GPS scheduler, for leaky-bucket constrained connections with deterministic delay guarantees. D. Nandita addresses in the paper that every session j is characterized by attributes including (1)Burstiness ($\sigma_j$), (2) Average Rate ($\rho_j$), (3) Delay Guarantee ($d_j$),(4) Allotted Rate ($r_j$).

Patent Application No. W02004/004212 A discloses a techniques for scheduling terminals with different scheduling delays.

US Patent Application No. US 2005/175014 A1 discloses a HPRR method using "token bucket" rate classifiers to mark each individual packet as conforming or not conforming to a traffic specification for the flow. The HPRR method allows a packet from a flow to be forwarded in one of two ways, either as part of its class's allocated bandwidth or as part of the "best effort" bandwidth.

EP Patent Application No. EP-A-1 292 054 discloses a dynamic bandwidth allocation circuit, method, program and recording medium, which includes setting a maximum value and a transmission cycle of a requested bandwidth for each service class and allocating bandwidth to a service path terminating section based on excess allocated bandwidth and request bandwidth of each service path terminating section.

US Patent Application No. US 2003/148768 A1 discloses a method and system for providing allocation of resources depending on the characteristics of the flow request. The system allocates resources based upon at least one of the parameters class of service, delay requirement and bandwidth requirement of the flow request.

### Summary of the Invention

The present disclosure provides a method and apparatus for performing the admission control for the Integrated Service Model, so as to effectively execute an admission control over the Integrated Service Model at the same time of guaranteeing the QoS of the connections and the utilization ratio of the network.

The present disclosure provides a method for performing admission control on the Integrated Service Model, including:

setting up time delay classes with different time delay requirements in the Integrated Service Model (1-1);

determining a time delay class to which a new connection belongs when the new connection requests to be established (1-1), initiating a iterative variables (1-3); allocating determined bandwidths to the time delay classes (1-5), and performing an admission control over the new connection in accordance with the relation between the bandwidths of respective classes of time delay and the bandwidth of the scheduler, wherein the performing an admission control over the new connection comprises: determining whether a total bandwidth of all determined time delay classes whose respective bandwidths have been determined is less than the bandwidth of the scheduler (1-9), if the total bandwidth of all the determined time delay classes is less than the bandwidth of the scheduler, determining whether a difference between the total bandwidth of all the determined time delay classes and the bandwidth of the scheduler is less than a preset value (1-12), admitting the new connection requesting to be established if the difference between the total bandwidth of all the time delay classes and the bandwidth of the scheduler is less than the preset value (1-10), and reducing the bandwidth of the scheduler to the total bandwidth of determined time delay classes, and re-performing the iteration process if the difference between the total bandwidth of all the determined time delay classes and the bandwidth of the scheduler is not less than the preset value (1-11); if the total bandwidth of all the determined time delay classes is not less than the bandwidth of the scheduler, rejecting the new connection requesting to be established (1-13).

Optionally, the time delay class is a group of connections, whose requirements of time delay fall into the same range; a time delay class represents a category of service; and all the connections in the same time delay class share the same buffered queue.

Optionally, the process for determining the time delay class to which a new connection belongs includes:

when $D_k \leq d < D_{k+1}$, the new connection belongs to time delay class $C_k$, where d is the time delay requirement of the new connection, $D_k$ is the time delay requirement of time delay class $C_k$, and $D_{k+1}$ is the time delay requirement of time delay class $C_{k+1}$;

after determining that the new connection belongs to time delay class $C_k$, the data flow parameters $(\sigma_k, \rho_k)$ of $C_k$ are updated into $\sigma_k = \sigma_k + \sigma$, $\rho_k = \rho_k + \rho$, where $(\sigma, \rho)$ are the data flow parameters of the new connection, $(\sigma_k, \rho_k)$ are data flow parameters of the time delay class $C_k$.

Optionally, the process for allocating determined bandwidths to the time delay classes includes:

allocating the bandwidths for all the time delay classes through an iterative process, in the case of a new connection requesting to be established, complying with the assumption that all services burst out with their maximum transmission rates, the allocated bandwidth including determined bandwidth and undetermined bandwidth; and calculating a time delay class whose backlog is firstly cleared at each round of iteration, and reallocating the surplus bandwidth released from the time delay class whose backlog has been cleared to time delay classes without determined bandwidth.

Optionally, the allocation of bandwidth for all the time delay classes through an iterative process includes:

initializing the iterative variables includes: setting i, the number of iteration rounds, as 0; using array L(i), i = 0, 1, 2,... as the i-th time delay class whose backlog has been cleared, where L(0) = 0; using array T(i), i = 0, 1, 2,... as the time elapsed for clearing backlog of the i-th time delay class, where T(0) = 0; and using arrays S(i), i = 0, 1, 2,... and R(i), i =1, 2, 3... as the parameters for service curve 0 to service curve i, where S(0) = 0, R(1) = 1;

step A. adding 1 to the variable i of the number of iteration rounds (1-4), step B. allocating bandwidth r to each time delay class without determined bandwidth, complying with the assumption that all services burst out with their maximum transmission rates (1-5); and step C. working out the time delay class L(i) whose backlog has been cleared firstly in this round of iteration, and the time elapsed for clearing backlog of the time delay class T(i) (1-6); step E. release the surplus bandwidth of L(i) (1-7);

step D. reallocating the released bandwidth to other time delay classes whose backlog is not cleared yet to obtain respective actual bandwidths of the other time delay classes whose backlog is not cleared,

step E. determining whether there is a time delay class without determined bandwidth, and the sum amount of determined bandwidths is less than the scheduler's bandwidth, if there is a time delay class without determined bandwidth and the sum amount of determined bandwidths is less than the scheduler's bandwidth, going to step A; otherwise, performing the process of determining whether the total bandwidth of all determined time delay classes whose respective bandwidths have been determined is less than the bandwidth of the scheduler.

Optionally, the allocating bandwidth r to each time delay class without determined bandwidth in accordance with the assumption that all services burst out with their maximum transmission rate (1-5) comprises:

$$\text{if } T(i-1) \leq d, \quad r = \max\left\{\frac{\rho}{R(i)}, \frac{\sigma}{S(i-1) + R(i)(d - T(i-1))}\right\},$$

this bandwidth is an undetermined one;

else, if $S(i-1)r < \sigma + \rho(T(i-1) - d)$, the bandwidth of the class is set as :

$r = \max\left\{\left\{\frac{\sigma + \rho(T(k) - d)}{S(k)} \mid T(k) \geq d\right\} \cup \left\{\frac{\sigma}{S(k) + R(k+1)(d - T(k))} \mid T(k) < d \leq T(k+1)\right\}\right\}$ ; else, the bandwidth of the class is determined as: $r = \frac{\rho}{R(i)}$.

Optionally, the process for reallocating surplus bandwidth released by the time delay class to other time delay classes without determined bandwidth includes:

determining the time delay class that renders the expression $\dfrac{\sigma + \rho T(i-1) - rS(i-1)}{rR(i) - \rho}$ a minimum value as class L(i) which is the first class in this round of iteration that has cleared its backlog among all the time delay classes with backlog, and the time elapsed for clearing backlog of L(i) being:

$$T(i) = \frac{\sigma + \rho T(i-1) - rS(i-1)}{rR(i) - \rho} + T(i-1)$$ , where σ,ρ,d,r are parameters of L(i);

releasing the surplus bandwidth of the L(i), and reallocating the released bandwidth to other time delay classes whose backlog have not been cleared, and after the reallocation of the bandwidth, the bandwidth of time delay classes whose backlog have not been cleared being:

$$R(i+1) = \frac{C - \sum_{k \in P} \rho_k}{C - \sum_{k \in P} r_k}$$ , $$S(i) = S(i-1) + R(i)(T(i) - T(i-1))$$ , where C is the bandwidth of the scheduler;

determining whether there is a time delay class without determined bandwidth, and the total bandwidth of determined time delay classes is less than the bandwidth of the scheduler. If there is a time delay class without determined bandwidth, and the total bandwidth of determined time delay classes is less than the bandwidth of the scheduler, re-perforrn the iteration process.

The present disclosure also provides an apparatus for performing an admission control over the Integrated Service Model, including:

a time delay class establishment unit adapted to establish time delay classes with different time delay requirements in the Integrated Service Model;

a time delay class determining and processing unit adapted to determine the time delay class to which a new connection belongs when the new connection requests to be established, and to trigger a bandwidth allocation unit described below accordingly;

a time delay class bandwidth allocation unit adapted to allocate determined bandwidths to time delay classes; an admission control unit adapted to perform admission control over the new connection according to the relationship between the bandwidths of time delay classes and the bandwidth of the scheduler, wherein the admission control unit comprises:

a first determining and processing unit adapted to determine whether the total bandwidth of all determined time delay classes is less than the bandwidth of the scheduler or not; if the total bandwidth of all the determined time delay classes is less than the bandwidth of the scheduler, a second determining and processing unit is triggered; otherwise, the new connection request is rejected; and

the second determining and processing unit adapted to determine whether a difference between the total bandwidth of all the determined time delay classes and the bandwidth of the scheduler is less than a preset value; if the difference between the total bandwidth of all the determined time delay classes and the bandwidth of the scheduler is less than the preset value, the new connection requesting to be established is admitted; otherwise, the bandwidth of the scheduler is reduced to the total bandwidth of all the determined time delay classes, and the time delay class bandwidth allocation unit is re-triggered.

Optionally, the time delay class determining and processing unit includes:

a time delay class determining unit adapted to classify a new connection to time delay class $C_k$ when the condition $D_k \leq d < D_{k+1}$ is met, where d is the time delay requirement of the new connection, $D_k$ is the time delay requirement of time delay class $C_k$, and $D_{k+1}$ is the time delay requirement of time delay class $C_{k+1}$;

a data flow parameters adjustment unit adapted to update $(\sigma_k, \rho_k)$, the data flow parameters of $C_k$, into $\sigma_k = \sigma_k + \sigma$, $\rho_k = \rho_k + \rho$, after the determination that the new connection belongs to time delay class $C_k$, where $(\sigma, \rho)$ are data flow parameters of the new connection, $(\sigma_k, \rho_k)$ are data flow parameters of the time delay class $C_k$.

Optionally, the time delay class bandwidth allocation unit includes:

allocating the bandwidths of all time delay classes through an iterative process when a new connection requests to be established, complying with the assumption that all services burst out with their maximum transmission rates, the allocated bandwidths including determined bandwidth and undetermined bandwidth; and calculating the time delay class whose backlog has been firstly cleared at each round of iteration, and reallocating the surplus bandwidth released from the time delay class to classes without determined bandwidth.

From the technical scheme of the present disclosure that is described above, it is obvious that the present disclosure chooses time delay classes, which come in a less amount, instead of service connections, which may reach a great quantity, as the object of calculation, thus effectively control the time-consuming complexity of calculation, so as to efficiently perform admission control over the Integrated Service Model while guaranteeing the QoS of connections and the utilization ratio of the network. The present disclosure can guarantee that the allocated bandwidth is able to satisfy the QoS requirement of each connection in the worst condition (that is, all services burst out with their maximum transmission rates). In addition, because the present disclosure has also taken into consideration the bandwidth released by time delay classes whose backlogs have been cleared, it has a higher utilization ratio of bandwidth.

**Brief Descriptions of the Drawings**

Figure 1 is a flow chart for specifically implementing the method according to the present disclosure;

Figure 2 is a schematic diagram of the principle for the usage of scheduler in the Integrated Service Model; and

Figure 3 is a schematic structure diagram of implementing the apparatus according to the present disclosure.

**Detailed Descriptions of the Embodiments**

The present disclosure provides a practical scheme for performing an admission control the Integrated Service Model. The present disclosure chooses time delay classes, which come in a less amount, instead of service connections which may reach a great quantity, as the object of calculation, and performs admission control on new connections according to the relationship between the determined bandwidths of the time delay classes and the bandwidth of the scheduler.

The embodiments of the present disclosure are described as follows in detail with reference to the accompanying drawings.

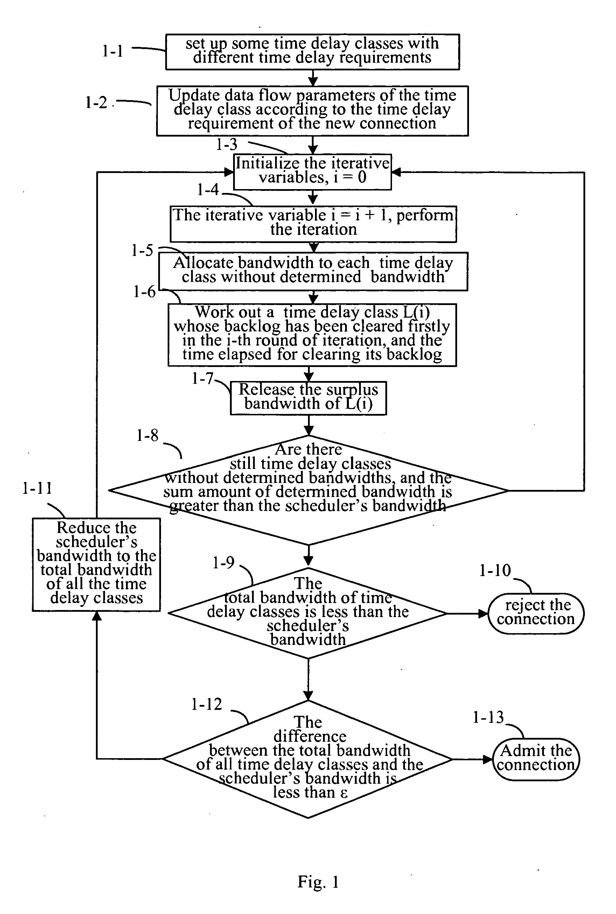

The flow chart for specifically implementing the method according to the present disclosure is shown in Figure 1, including the following steps.

Step 1-1: set up some time delay classes with different time delay requirements.

In this step, the first task is to set up some time delay classes with different time delay requirements. The time delay class is a group of connections, whose requirements of time delay fall into the same range. For example, if the range of time delay class A is defined as 1-2 seconds, both the connection with a time delay request of 1.1s and the connection with a time delay requirement of 1.9s belong to this class A. A time delay class represents a category of service.

This step is performed before the system enters state of normal operation. Upon the assumption that the time delay requirement of each time delay class $C_i$ is $D_i (i = 1, L, N)$, the principle should be: a time delay class with a less time delay requirement should have a less serial number, that is, if $i < j$, $D_i < D_j$. The actual value of $D_i (i = 1, L, N)$ can be set flexibly according to the conditions of practical services.

In the present disclosure, all the connections in the same time delay class share a same buffered queue. Due to the burst nature of data service, usually the data that has not been timely transferred is stored temporarily in the buffer queue of the time delay class, which is referred to as backlog. After a while, when the backlog data has been transferred, and there is no more data in the buffer queue of the time delay class, backlog of the time delay class has been cleared. The time elapsed from the emergence of backlog to its elimination is the period for backlog of the time delay class to be cleared.

Step 1-2: Update data flow parameters of the time delay class according to the time delay requirement of the new connection.

After the system starts operation, and enter state of normal operational, if a new connection requests to be established, the time delay class to which it belongs is determined firstly. According to the assumption in step 1-1, the corresponding method for determination could be: if $D_k \leq d < D_{k+1}$, the new connection belongs to time delay class $C_k$, where d is the time delay requirement of the new connection.

After determining that the new connection belongs to time delay class $C_k$, update $(\sigma_k, \rho_k)$, the data flow parameters of $C_k$, into $\sigma_k = \sigma_k + \sigma$, $\rho_k = \rho_k + \rho$, where $(\sigma, \rho)$ are data flow parameters of the new connection.

Step 1-3: Initialize the iterative variable, i = 0.

Following the steps as mentioned above, the present disclosure uses iteration to allocate bandwidth for all time delay classes. Before the iteration, the iterative variables need to be initialized first. The iterative variables requiring to be initialized include:

i: the number of iteration rounds. i = 0 upon initializing.

B represents time delay classes whose bandwidth is not determined and whose backlog is not cleared. B = all time delay classes upon initializing.

H represents time delay classes whose bandwidth is determined and whose backlog is not cleared. H = null upon initializing.

P represents time delay classes whose bandwidth is determined and whose backlog is cleared. P = null upon initializing.

L(i), i = 0, 1, 2...: the i-th time delay class whose backlog has been cleared. For example, if the fourth time delay class whose backlog has been cleared is time delay class 3, L(4) = 3. L(0) = 0 upon initializing.

T(i), i = 0, 1, 2...: the time elapsed for the i-th time delay class to clear its backlog; For example, if the fourth time delay class that has cleared its backlog has used 3 seconds to do so, T(4) = 3. T(0) = 0 upon initializing.

S(i), i = 0, 1, 2,... and R(i), i = 1, 2, 3...: parameters for the service curve. S(0)=0,R(1)=1.

Step 1-4: Add 1 to the iterative variable i, start the iteration.

Add 1 to iterative variable i, that is, i = i + 1, start the iteration.

Because every round of iteration can work out the time elapsed for clearing backlog of one time delay class, the number of iteration rounds reflects the sequence of the time delay classes in clearing their backlog.

Step 1-5: Allocate bandwidth to each time delay class without determined bandwidth.

Bandwidth r is allocated to each undetermined time delay class according to the assumption of the worst condition (that is, all services burst out with their maximum transmission rate). The detailed calculation process is as below:

If $T(i-1) \leq d$, $r = \max\{\dfrac{\rho}{R(i)}, \dfrac{\sigma}{S(i-1) + R(i)(d - T(i-1))}\}$ . The bandwidth of the time delay class is not yet determined, and is possible to be reallocated in later iterations (further reduced). The T (i-1) in the calculation is the time elapsed for clearing backlog of the time delay class in the last iterative round.

Otherwise,

$$r = \frac{\rho}{R(i)} .$$

If $S(i-1) r = \sigma + \rho(T(i-1) - d)$, the bandwidth of the time delay class is determined; Otherwise, the bandwidth of the time delay class is determined as

$r = \max\{\{\dfrac{\sigma + \rho(T(k)-d)}{S(k)} | T(k) \geq d\} \cup \{\dfrac{\sigma}{S(k) + R(k+1)(d - T(k))} | T(k) < d \leq T(k+1)\}\}$ .

Step 1-6: Work out the time delay class L(i) whose backlog has been cleared firstly in this round of iteration, and the time elapsed for clearing backlog of the time delay class.

The method for working out the time delay class L(i) whose backlog has been cleared firstly in this round of iteration (round i) is as follows. Among all the time delay classes with backlog, choose the time delay class that renders the expression $\dfrac{\sigma + \rho T(i-1) - rS(i-1)}{rR(i) - \rho}$ a minimum value as class L(i).

The time elapsed for clearing backlog of L(i) is:

$T(i) = \dfrac{\sigma + \rho T(i-1) - rS(i-1)}{rR(i) - \rho} + T(i-1)$ , where σ,ρ,d,r are parameters of L(i).

Step 1-7: Release the surplus bandwidth of L(i).

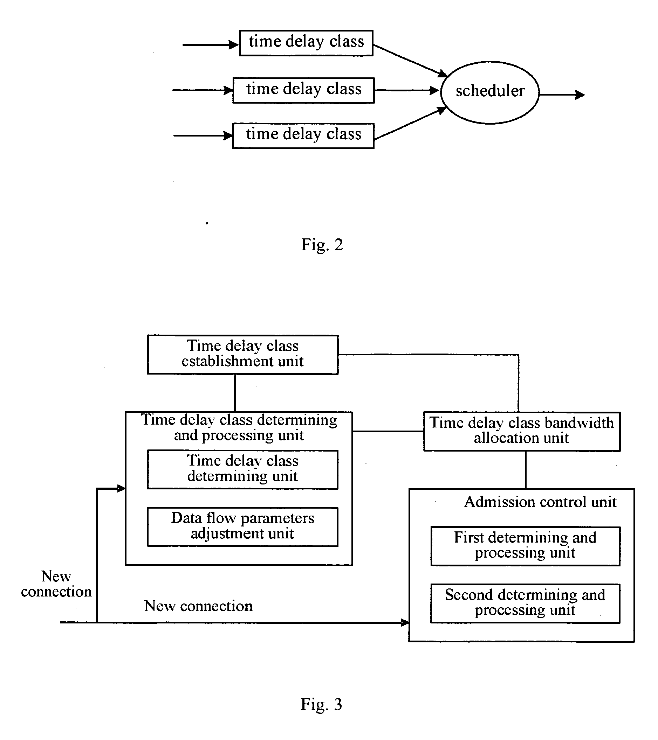

The principle for the use of scheduler in the Integrated Service Model is shown in Figure 2. The scheduler takes out data from buffer queues of time delay classes according to certain rules, and transfers it to the output terminal of the scheduler. The scheduler bandwidth is the maximum output transmission rate of the scheduler.

After backlog of L(i) is cleared, the required bandwidth is reduced, and the surplus bandwidth is released. The released bandwidth can be reallocated to other time delay classes whose backlog is not cleared yet.

After the surplus bandwidth of L(i) has been released, the actual bandwidth of time delay classes whose backlog is not cleared is: $R(i+1) = \dfrac{C - \sum_{k \in P} \rho_k}{C - \sum_{k \in P} r_k}$ , $S(i) = S(i-1)+R(i)(T(i)-T(i-1))$, where C is the scheduler bandwidth. Here is an example of this calculation method.

Assume that the scheduler bandwidth is 100, and A, B, C, D are four time delay classes with backlog, whose allocated bandwidths are 10, 20, 30, and 40 respectively. Assuming that after a moment, backlog of class B has been cleared firstly, and now the bandwidth demand of class B is only 5, the actual bandwidths of time delay classes (A, C, D) whose backlog is not cleared change respectively to 10*(100-5)/(100-20), 30*(100-5)/(100-20), and 40*(100-5)/ (100-20). If, after another moment, backlog of class C has been cleared, and now the bandwidth demand of class C is only 10, the actual bandwidths of time delay classes (A, D) whose backlog is not cleared change respectively to 10*(100-5-10)/(100-20-30) and 40*(100-5-10)/(100-20-30).

Step 1-8: There are time delay classes without determined bandwidth, and the sum amount of determined bandwidth is greater than the scheduler's bandwidth.

Determine whether there is a time delay class without determined bandwidth, and the sum amount of determined bandwidths is less than the scheduler's bandwidth. If there is a time delay class without determined bandwidth, and the sum amount of determined bandwidths is less than the scheduler's bandwidth, go to step 1-4; otherwise, go to step 1-9.

Step 1-9: The total bandwidth of all the time delay classes is less than the scheduler's bandwidth.

Determine whether the total bandwidth of time delay classes is less than the scheduler bandwidth. If the total bandwidth of time delay classes is less than the scheduler bandwidth, go to step 1-12; otherwise, go to step 1-10.

Step 1-10: Reject the connection.

Reject the connection that is requesting to be established.

Step 1-11: Reduce the scheduler bandwidth to the total bandwidth of all the time delay classes.

Reduce the scheduler bandwidth to the total bandwidth of all the determined time delay classes, and go to step 1-3 to restart the iteration.

Step 1-12: The difference between the total bandwidth of all time delay classes and the scheduler's bandwidth is less than ε.

Determine whether the difference between the total bandwidth of all time delay classes and the scheduler's bandwidth is less than a preset value ε. If the difference between the total bandwidth of all time delay classes and the scheduler's bandwidth is less than a preset value ε, than go to step 1-13; otherwise, go to step 1-11.

Step 1-13: Admit the connection.

Admit the connection requesting to be established.

The present disclosure also provides an apparatus for performing an admission control over the Integrated Service Model, whose actual structure is shown in Figure 3, mainly including the following processing units:

(1) A time delay class establishment unit, which establishes time delay classes with different time delay requirements in the Integrated Service Model. Each time delay class may include various connections whose time delay requirements fall into the same range, that is, the time delay class is a group of connections whose requirements of time delay fall into the same range; a time delay class represents a category of service; and all the connections in the same time delay class share the same buffered queue. All the established time delay classes form a sequence, which is arranged according to their respective time delay requirement (e.g. arranged in ascending order).

(2) A time delay class determining and processing unit, which determines the time delay class to which a new connection belongs when the new connection requests to be established, and to trigger a time delay class bandwidth allocation unit;

To be specific, the time delay class determining and processing unit includes:

a time delay class determination unit adapted to classify a new connection to time delay class $C_k$ when condition $D_k \leq d < D_{k+1}$ is met, where d is the time delay requirement of the new connection, $D_k$ is the time delay requirement of time delay class $C_k$, and $D_{k+1}$ is the time delay requirement of time delay class $C_{k+1}$;

a data flow parameters adjustment unit adapted to update $(\sigma_k, \rho_k)$, the data flow parameters of $C_k$, into $\sigma_k = \sigma_k + \sigma$, $\rho_k = \rho_k + \rho$, after determining the new connection belongs to time delay class $C_k$, where $(\sigma, \rho)$ are data flow parameters of the new connection.

(3) A time delay class bandwidth allocation unit, which allocates determined bandwidth to the time delay classes. The process of the time delay class bandwidth allocation unit includes:

allocating the bandwidths of all time delay classes through an iterative process when a new connection requests to be established, complying with the assumption that all services burst out with their maximum transmission rates, the allocated bandwidths including determined bandwidth and undetermined bandwidth; and calculating the time delay class whose backlog has been firstly cleared at each round of iteration, and reallocating the surplus bandwidth released from the time delay class to classes without determined bandwidth. The specific iterative processes are omitted herein, because they have been described above.

(4) An admission control unit, which performs admission control over new connections according to the relationship between the bandwidths of time delay classes and the bandwidth of the scheduler. To be specific, the admission control unit includes:

a first determining and processing unit adapted to determine whether the total bandwidth of determined time delay classes is less than the bandwidth of the scheduler or not; if the total bandwidth of determined time delay classes is less than the bandwidth of the scheduler, it triggers a second determining and processing unit; otherwise, it denies the new connection requesting to be established;

a second determining and processing unit adapted to determine whether the difference between the total bandwidth of determined time delay classes and the bandwidth of the scheduler is less than the preset value; if the difference between the total bandwidth of determined time delay classes and the bandwidth of the scheduler is less than the preset value, it admits the new connection requesting to be established; otherwise, it reduces the bandwidth of the scheduler to the total bandwidth of determined time delay classes, and re-triggers the time delay class bandwidth allocation unit.

The present invention is disclosed by, but not limited to, above exemplary embodiments. Any modifications and variations that those skilled in the art can easily work out in the scopes of the present disclosure shall also be included in the protected scope of the present disclosure. Therefore, the protected scope of the present disclosure shall comply with the appended claims.

**Claims**

1. A method for performing an admission control over an Integrated Service Model, comprising:

   setting up time delay classes with different time delay requirements in the Integrated Service Model (1-1); and determining a time delay class to which a new connection belongs upon the new connection requesting to be established (1-1),
   initializing iterative variables (1-3);
   allocating determined bandwidths to the time delay classes (1-5), and
   performing an admission control over the new connection in accordance with the relationship between bandwidths of respective time delay classes and a bandwidth of a scheduler, wherein the performing an admission control over the new connection comprises:

   determining whether a total bandwidth of all determined time delay classes whose respective bandwidths have been determined is less than the bandwidth of the scheduler (1-9),
   if the total bandwidth of all the determined time delay classes is less than the bandwidth of the scheduler, determining whether a difference between the total bandwidth of all the determined time delay classes and the bandwidth of the scheduler is less than a preset value (1-12), admitting the new connection requesting to be established if the difference between the total bandwidth of all the time delay classes and the bandwidth of the scheduler is less than the preset value (1-10), and reducing the bandwidth of the scheduler to the total bandwidth of determined time delay classes, and re-performing the iteration process if the difference between the total bandwidth of all the determined time delay classes and the bandwidth of the scheduler is not less than the preset value (1-11);
   if the total bandwidth of all the determined time delay classes is not less than the bandwidth of the scheduler, rejecting the new connection requesting to be established (1-13).

2. The method for performing an admission control over an Integrated Service Model according to claim 1, wherein the time delay class is a group of connections whose requirements of time delay fall into the same range, and one time delay class represents a category of service, and all the connections in the same time delay class share a same buffered queue.

3. The method for performing an admission control over an Integrated Service Model according to claim 2, wherein the time delay classes form a sequence which is arranged in accordance with time delay requirements.

4. The method for performing an admission control over an Integrated Service Model according to any one of claims 1 to 3, wherein the determining the time delay class to which a new connection belongs comprises:

   determining the new connection belonging to time delay class $C_k$, if $D_k \leq d < D_{k+1}$ is met, wherein d is the time delay requirement of the new connection, $D_k$ is the time delay requirement of time delay class $C_k$, and $D_{k+1}$ is the time delay requirement of time delay class $C_{k+1}$;
   updating the data flow parameters $(\sigma_k, \rho_k)$ of $C_k$ into $\sigma_k = \sigma_k + \sigma$, $\rho_k = \rho_k + \rho$ after determining that the new connection belongs to time delay class $C_k$, wherein $(\sigma, \rho)$ are data flow parameters of the new connection, $(\sigma_k, \rho_k)$ are data flow parameters of the time delay class $C_k$.

5. The method for performing an admission control over an Integrated Service Model according to claim 4, wherein the process for allocating determined bandwidths to the time delay classes comprises:

   allocating bandwidth for all the time delay classes through an iterative process when the new connection requests to be established, complying with the assumption that all services burst out with their maximum transmission rates, the allocated bandwidths comprising determined bandwidth and undetermined bandwidth; and calculating a time delay class whose backlog has been firstly cleared upon each round of iteration, and reallocating the surplus bandwidth released from the time delay class whose backlog has been cleared to time delay classes without determined bandwidth.

6. The method for performing an admission control over an Integrated Service Model according to claim 5, wherein initializing the iterative variables comprises: setting i, the number of iteration rounds, as 0; using array L(i), i = 0, 1, 2,... as the i-th time delay class whose backlog has been cleared, wherein L(0) = 0; using array T(i) , i = 0, 1, 2,... as a time elapsed for clearing backlog of the i-th time delay class; wherein T(0) = 0; and using arrays S(i), i = 0, 1, 2,... and R(i), i = 1, 2, 3... as parameters for service curve 0 to service curve i, wherein S(0) = 0, R(1) = 1; and allocating bandwidth for all the time delay classes comprises:

step A. adding 1 to the round variable i (1-4),
step B. allocating bandwidth r to each time delay class without determined bandwidth in accordance with the assumption that all services burst out with their maximum transmission rate (1-5); and
step C. working out the time delay class L(i) whose backlog has been cleared firstly in this round of iteration, and the time elapsed for clearing backlog of the time delay class T(i) (1-6);
step D. release the surplus bandwidth of L(i) (1-7);
step E. reallocating the released bandwidth to other time delay classes whose backlog is not cleared yet to obtain respective actual bandwidths of the other time delay classes whose backlog is not cleared,
step F. determining whether there is a time delay class without determined bandwidth, and the sum amount of determined bandwidths is less than the scheduler's bandwidth, if there is a time delay class without determined bandwidth and the sum amount of determined bandwidths is less than the scheduler's bandwidth, going to step A; otherwise, performing the process of determining whether the total bandwidth of all determined time delay classes whose respective bandwidths have been determined is less than the bandwidth of the scheduler.

7. The method for performing an admission control over an Integrated Service Model according to claim 5, wherein the allocating bandwidth r to each time delay class without determined bandwidth in accordance with the assumption that all services burst out with their maximum transmission rate (1-5) comprises:

if $T(i$ - $1) \leq d$ , $r = \max \{ \dfrac{\rho}{R(i)}, \dfrac{\sigma}{S(i-1) + R(i)(d - T(i-1))} \}$ , the bandwidth is an undetermined bandwidth;

else, if $S(i$ - $1) r < \sigma + \rho(T(i$ $i$ $1) - d)$, set the bandwidth of the class as :

$$r = \max \{ \{ \frac{\sigma + \rho(T(k) - d)}{S(k)} | T(k) \geq d \} \cup \{ \frac{\sigma}{S(k) + R(k+1)(d - T(k))} | T(k) < d \leq T(k+1) \} \} ;$$

else, the bandwidth of the class is determined as $r = \dfrac{\rho}{R(i)}$ .

8. The method for performing an admission control over an Integrated Service Model according to claim 7, wherein the reallocating the surplus bandwidth released from the time delay class to classes without determined bandwidth comprises:

determining the time delay class that renders the expression $\dfrac{\sigma + \rho T(i-1) - r S(i-1)}{r R(i) - \rho}$ a minimum value as class L(i) which is the first time delay class whose backlog has been cleared in this round of iteration among all the time delay classes with backlog, the time elapsed for clearing backlog of L(i) being:

$$T(i) = \frac{\sigma + \rho T(i-1) - r S(i-1)}{r R(i) - \rho} + T(i-1)$$ , wherein $\sigma, \rho, d, r$ are parameters of L(i);
releasing the surplus bandwidth of the L(i), and reallocating the released bandwidth to other time delay classes whose backlog have not been cleared, the bandwidth of time delay class whose backlog has not been cleared

being: $R(i+1) = \dfrac{C - \sum_{k \in P} \rho_k}{C - \sum_{k \in P} r_k}$ after the reallocation of the bandwidth, $S(i) = S(i\text{-}1) + R(i)(T(i) - T(i\text{-}1))$,

wherein C is the bandwidth of the scheduler;
determining whether there is a time delay class without determined bandwidth, and the total bandwidth of determined time delay classes is less than the bandwidth of the scheduler; if there is a time delay class without determined bandwidth, and the total bandwidth of determined time delay classes is less than the bandwidth of the scheduler, re-performing the iteration process.

9. An apparatus for performing an admission control over an Integrated Service Model, comprising:

a time delay class establishment unit adapted to establish time delay classes with different time delay requirements in the Integrated Service Model;
a time delay class determining and processing unit adapted to determine the time delay class to which a new connection belongs when a new connection requests to be established, and to trigger a time delay class bandwidth allocation unit;
the time delay class bandwidth allocation unit adapted to distribute determined bandwidth to the time delay class; and
an admission control unit adapted to perform admission control over the new connection according to the relationship between the bandwidths of respective time delay classes and a bandwidth of a scheduler, **characterized in that** the admission control unit comprises:

a first determining and processing unit adapted to determine whether the total bandwidth of all determined time delay classes is less than the bandwidth of the scheduler or not; if the total bandwidth of all the determined time delay classes is less than the bandwidth of the scheduler, a second determining and processing unit is triggered; otherwise, the new connection request is rejected; and
the second determining and processing unit adapted to determine whether a difference between the total bandwidth of all the determined time delay classes and the bandwidth of the scheduler is less than a preset value; if the difference between the total bandwidth of all the determined time delay classes and the bandwidth of the scheduler is less than the preset value, the new connection requesting to be established is admitted; otherwise, the bandwidth of the scheduler is reduced to the total bandwidth of all the determined time delay classes, and the time delay class bandwidth allocation unit is re-triggered.

10. The apparatus for performing an admission control over an Integrated Service Model according to claim 9, wherein the time delay class determining and processing unit comprises:

a time delay class determining unit adapted to classify the new connection to the time delay class $C_k$ when condition $D_k \le d < D_{k+1}$ is met, wherein d is the time delay request of the new connection, $D_k$ is the time delay requirement of the time delay class, $C_k$ and $D_{k+1}$ is the time delay request of the time delay class $C_{k+1}$; and
a data flow parameters adjustment unit adapted to update $(\sigma_k, \rho_k)$, the data flow parameters of $C_k$, into $\sigma_k = \sigma_k + \sigma$, $\rho_k = \rho_k + \rho$ after determining that the new connection belongs to the time delay class $C_k$, wherein $(\sigma, \rho)$ are data flow parameters of the new connection, $(\sigma_k, \rho_k)$ are data flow parameters of the time delay class $C_k$.

11. The apparatus for performing an admission control over an Integrated Service Model according to claim 9 or 10, wherein the time delay class bandwidth allocation unit comprises:

allocating bandwidth for all the time delay classes through an iterative process upon a new connection requesting to be established, complying with the assumption that all services burst out with their maximum transmission rates, the allocated bandwidths comprising determined bandwidth and undetermined bandwidth; and upon each round of iteration, the time delay class whose backlog has been firstly cleared is calculated, so as to reallocate the surplus bandwidth released from the time delay class to classes without determined bandwidth.

**Patentansprüche**

1. Verfahren zum Durchführen einer Zugangskontrolle über einem dienstintegrierten Modell, mit den folgenden Schritten:

Einrichten von Zeitverzögerungsklassen mit verschiedenen Zeitverzögerungsanforderungen in dem dienstintegrierten Modell (1-1); und
Bestimmen einer Zeitverzögerungsklasse, zu der eine neue Verbindung gehört, wenn die neue Verbindung anfordert, hergestellt zu werden (1-1),
Initialisieren von iterativen Variablen (1-3);
Vergeben von bestimmten Bandbreiten an die Zeitverzögerungsklassen (1-5) und Durchführen einer Zugangskontrolle über der neuen Verbindung gemäß der Beziehung zwischen Bandbreiten jeweiliger Zeitverzögerungsklassen und einer Bandbreite eines Schedulers, wobei das Durchführen einer Zugangskontrolle über der neuen Verbindung Folgendes umfasst:

Bestimmen, ob eine Gesamtbandbreite aller bestimmter Zeitverzögerungsklassen, deren jeweilige Bandbreiten bestimmt wurden, kleiner als die Bandbreite des Schedulers ist (1-9),
wenn die Gesamtbandbreite aller bestimmten Zeitverzögerungsklassen kleiner als die Bandbreite des Schedulers ist, Bestimmen, ob eine Differenz zwischen der Gesamtbandbreite aller bestimmten Zeitverzögerungsklassen und der Bandbereite des Schedulers kleiner als ein voreingestellter Wert ist (1-12), Zulassen der neuen Verbindung, die anfordert, hergestellt zu werden, wenn die Differenz zwischen der Gesamtbandbreite aller Zeitverzögerungsklassen und der Bandbreite des Schedulers kleiner als der voreingestellte Wert ist (1-10) und Verringern der Bandbreite des Schedulers auf die Gesamtbandbreite bestimmter Zeitverzögerungsklassen und erneutes Durchführen des Iterationsprozesses, wenn die Differenz zwischen der Gesamtbandbreite aller bestimmten Zeitverzögerungsklassen und der Bandbreite des Schedulers nicht kleiner als der voreingestellte Wert ist (1-11);
wenn die Gesamtbandbreite aller bestimmten Zeitverzögerungsklassen nicht kleiner als die Bandbreite des Schedulers ist, Zurückweisen der neuen Verbindung, die anfordert, hergestellt zu werden (1-13).

**2.** Verfahren zum Durchführen einer Zugangskontrolle über einem dienstintegrierten Modell nach Anspruch 1, wobei die Zeitverzögerungsklasse eine Gruppe von Verbindungen ist, deren Anforderungen bezüglich Zeitverzögerung in denselben Bereich fallen, und eine Zeitverzögerungsklasse eine Dienstkategorie repräsentiert und sich alle Verbindungen in derselben Zeitverzögerungsklasse eine selbe gepufferte Warteschlange teilen.

**3.** Verfahren zum Durchführen einer Zugangskontrolle über einem dienstintegrierten Modell nach Anspruch 2, wobei die Zeitverzögerungsklassen eine Sequenz bilden, die gemäß Zeitverzögerungsanforderungen angeordnet ist.

**4.** Verfahren zum Durchführen einer Zugangskontrolle über einem dienstintegrierten Modell nach einem der Ansprüche 1 bis 3, wobei das Bestimmen der Zeitverzögerungsklasse, zu der eine neue Verbindung gehört, Folgendes umfasst: Bestimmen, dass die neue Verbindung zu der Zeitverzögerungsklasse $C_k$ gehört, wenn $D_k \leq d < D_{k+1}$ erfüllt ist, wobei d die Zeitverzögerungsanforderung der neuen Verbindung, $D_k$ die Zeitverzögerungsanforderung der Zeitverzögerungsklasse $C_k$ und $D_{k+1}$ die Zeitverzögerungsanforderung der Zeitverzögerungsklasse $C_{k+1}$ ist; Aktualisieren der Datenflussparameter $(\sigma_k, \rho_k)$ von $C_k$ zu $\sigma_k = \sigma_k + \sigma$, $\rho_k = \rho_k + \rho$ nach dem Bestimmen, dass die neue Verbindung zu der Zeitverzögerungsklasse $C_k$ gehört, wobei $(\sigma, \rho)$ Datenflussparameter der neuen Verbindung und $(\sigma_k, \rho_k)$ Datenflussparameter der Zeitverzögerungsklasse $C_k$ sind.

**5.** Verfahren zum Durchführen einer Zugangskontrolle über einem dienstintegrierten Modell nach Anspruch 4, wobei der Prozess zum Vergeben bestimmter Bandbreiten an die Zeitverzögerungsklassen Folgendes umfasst:

Vergeben von Bandbreite für alle Zeitverzögerungsklassen durch einen iterativen Prozess, wenn die neue Verbindung anfordert, hergestellt zu werden, Einhalten der Annahme, dass alle Dienste mit ihren maximalen Übertragungsraten heraustreten, wobei die vergebenen Bandbreiten bestimmte Bandbereite und unbestimmte Bandbreite umfassen; und
Berechnen einer Zeitverzögerungsklasse, deren Rückstand zuerst bei jeder Iterationsrunde geleert wurde, und Neuvergeben der aus der Zeitverzögerungsklasse, deren Rückstand geleert wurde, freigegebenen überschüssigen Bandbreite an Zeitverzögerungsklassen ohne bestimmte Bandbreite.

**6.** Verfahren zum Durchführen einer Zugangskontrolle über einem dienstintegrierten Modell nach Anspruch 5, wobei das Initialisieren der iterativen Variablen Folgendes umfasst: Setzen von i, der Anzahl der Iterationsrunden, als 0; Verwenden des Arrays L(i), i = 0, 1, 2, ... als i-te Zeitverzögerungsklasse, deren Rückstand geleert wurde, mit L(0) = 0; Verwenden eines Arrays T(i), i = 0, 1, 2, ... als eine vergangene Zeit zum Leeren des Rückstands der i-ten Zeitverzögerungsklasse; mit T(0) = 0; und Verwenden von Arrays S(i), i = 0, 1, 2, ... und R(i), i = 1, 2, 3 ... als Parameter für Dienstkurve 0 bis Dienstkurve i mit S(0) = 0, R(1) = 1; und
das Vergeben von Bandbreite für alle Zeitverzögerungsklassen Folgendes umfasst:

Schritt A. Addieren von 1 zu der Rundenvariablen i (1-4),
Schritt B. Vergeben der Bandbreite r an jede Zeitverzögerungsklasse ohne bestimmte Bandbreite gemäß der Annahme, dass alle Dienste mit ihrer maximalen Übertragungsrate heraustreten (1-5); und
Schritt C. Ausarbeiten der Zeitverzögerungsklasse L(i), deren Rückstand zuerst in dieser Iterationsrunde geleert wurde, und der vergangenen Zeit zum Leeren des Rückstands der Zeitverzögerungsklasse T(i) (1-6);
Schritt D. Freigeben der überschüssigen Bandbreite von L(i) (1-7);
Schritt E. Neuvergeben der freigegebenen Bandbreite an andere Zeitverzögerungsklassen, deren Rückstand noch nicht geleert ist, um jeweilige tatsächliche Bandbreiten der anderen Zeitverzögerungsklassen zu erhalten, deren Rückstand nicht geleert ist,
Schritt F. Bestimmen, ob es eine Zeitverzögerungsklasse ohne bestimmte Bandbreite gibt und der Summenbetrag bestimmter Bandbreiten kleiner als die Bandbreite des Schedulers ist, wenn es eine Zeitverzögerungsklasse ohne bestimmte Bandbreite gibt und der Summenbetrag bestimmter Bandbreiten kleiner als die Bandbreite des Schedulers ist, Gehen zu Schritt A; andernfalls Durchführen des Prozesses des Bestimmens, ob die Gesamtbandbreite aller bestimmten Zeitverzögerungsklassen, deren jeweilige Bandbreiten bestimmt wurden, kleiner als die Bandbreite des Schedulers ist.

7. Verfahren zum Durchführen einer Zugangskontrolle über einem dienstintegrierten Modell nach Anspruch 5, wobei das Vergeben von Bandbreite r an jede Zeitverzögerungsklasse ohne bestimmte Bandbreite gemäß der Annahme, dass alle Dienste mit ihrer maximalen Übertragungsrate heraustreten (1-5), Folgendes umfasst:

im Fall $T(i-1) \leq d$, $r = \max\{\dfrac{\rho}{R(i)}, \dfrac{\sigma}{S(i-1) + R(i)(d - T(i-1))}\}$ ist die Bandbreite eine unbestimmte Bandbreite; andernfalls, im Fall S $(i-1)$ $r < \sigma + \rho$ $(T(i-1) - d)$, Setzen der Bandbreite der Klasse folgendermaßen:

$$r = \max\{\{\frac{\sigma + \rho(T(k) - d)}{S(k)} | T(k) \geq d\} \cup \{\frac{\sigma}{S(k) + R(k+1)(d - T(k))} | T(k) < d \leq T(k+1)\}\};$$

andernfalls wird die Bandbreite der Klasse als $r = \dfrac{\rho}{R(i)}$ bestimmt.

8. Verfahren zum Durchführen einer Zugangskontrolle über einem dienstintegrierten Modell nach Anspruch 7, wobei das Neuvergeben der aus der Zeitverzögerungsklasse freigegebenen überschüssigen Bandbreite an Klassen ohne

Bestimmen der Zeitverzögerungsklasse, die den Ausdruck $\dfrac{\sigma + \rho T(i-1) - rS(i-1)}{rR(i) - \rho}$ zu einem Minimalwert

überführt, als die Klasse L(i), die unter allen Zeitverzögerungsklassen mit Rückstand die erste Zeitverzögerungsklasse ist, deren Rückstand in dieser Iterationsrunde geleert wurde, wobei die vergangene Zeit zum Leeren des Rückstands von L(i) $T(i) = \dfrac{\sigma + \rho T(i-1) - rS(i-1)}{rR(i) - \rho} + T(i-1)$ ist, wobei σ, ρ, d, r

Parameter von L(i) sind;
Freigeben der überschüssigen Bandbreite der L(i) und Neuvergeben der freigegebenen Bandbreite an andere Zeitverzögerungsklassen, deren Rückstand nicht geleert wurde, wobei es sich bei der Bandbreite der Zeitverzögerungsklasse, deren Rückstand nicht geleert wurde, um Folgendes handelt:

$R(i+1) = \dfrac{C - \sum_{k \in P} \rho_k}{C - \sum_{k \in P} r_k}$ nach der Neuvergabe der Bandbreite, $S(i) = S(i-1) +$ wobei C die Bandbreite des Schedulers ist;

Bestimmen, ob es eine Zeitverzögerungsklasse ohne bestimmte Bandbreite gibt und die Gesamtbandbreite bestimmter Zeitverzögerungsklassen kleiner als die Bandbreite des Schedulers ist; wenn es eine Zeitverzögerungsklasse ohne bestimmte Bandbreite gibt und die Gesamtbandbreite bestimmter Zeitverzögerungsklassen kleiner als die Bandbreite des Schedulers ist, Neudurchführen des Iterationsprozesses.

9. Vorrichtung zum Durchführen einer Zugangskontrolle über einem dienstintegrierten Modell, umfassend:

eine Zeitverzögerungsklasse-Einrichteinheit, die dafür ausgelegt ist, Zeitverzögerungsklassen mit verschiedenen Zeitverzögerungsanforderungen in dem dienstintegrierten Modell einzurichten;
eine Zeitverzögerungsklassen-Bestimmungs- und -Verarbeitungseinheit, die dafür ausgelegt ist, die Zeitverzögerungsklasse zu bestimmen, zu der eine neue Verbindung gehört, wenn eine neue Verbindung anfordert, hergestellt zu werden, und eine Zeitverzögerungsklassen-Bandbreitenvergabeeinheit zu triggern;

wobei die Zeitverzögerungsklassen-Bandbreitenvergabeeinheit dafür ausgelegt ist, bestimmte Bandbreite an die Zeitverzögerungsklasse zu verteilen; und
eine Zugangskontrolleinheit, die dafür ausgelegt ist, Zugangskontrolle über der neuen Verbindung gemäß der Beziehung zwischen den Bandbreiten jeweiliger Zeitverzögerungsklassen und einer Bandbreite eines Schedulers durchzuführen, **dadurch gekennzeichnet, dass** die Zugangskontrolleinheit Folgendes umfasst:

eine erste Bestimmungs- und Verarbeitungseinheit, die dafür ausgelegt ist, zu bestimmen, ob die Gesamtbandbreite aller bestimmten Zeitverzögerungsklassen kleiner als die Bandbreite des Schedulers ist oder nicht; wenn die Gesamtbandbreite aller bestimmten Zeitverzögerungsklassen kleiner als die Bandbreite des Schedulers ist, wird eine zweite Bestimmungs- und Verarbeitungseinheit getriggert; andernfalls wird die neue Verbindungsanforderung zurückgewiesen; und

wobei die zweite Bestimmungs- und Verarbeitungseinheit dafür ausgelegt ist, zu bestimmen, ob eine Differenz zwischen der Gesamtbandbreite aller bestimmten Zeitverzögerungsklassen und der Bandbreite des Schedulers kleiner als ein voreingestellter Wert ist; wenn die Differenz zwischen der Gesamtbandbreite aller bestimmten Zeitverzögerungsklassen und der Bandbreite des Schedulers kleiner als der voreingestellte Wert ist, wird die neue Verbindung, die anfordert, hergestellt zu werden, zugelassen, andernfalls wird die Bandbreite des Schedulers auf die Gesamtbandbreite aller bestimmten Zeitverzögerungsklassen verringert und die Zeitverzögerungsklassen-Bandbreitenvergabeeinheit erneut getriggert.

10. Vorrichtung zum Durchführen einer Zugangskontrolle über einem dienstintegrierten Modell nach Anspruch 9, wobei die Zeitverzögerungsklassen- Bestimmungs- und - Verarbeitungseinheit Folgendes umfasst:

eine Zeitverzögerungsklassen-Bestimmungseinheit, die dafür ausgelegt ist, die neue Verbindung in die Zeitverzögerungsklasse $C_k$ zu klassifizieren, wenn die Bedingung $D_k \leq d < D_{k+1}$ erfüllt ist, wobei d die Zeitverzögerungsanforderung der neuen Verbindung, $D_k$ die Zeitverzögerungsanforderung der Zeitverzögerungsklasse $C_k$ und $D_{k+1}$ die Zeitverzögerungsanforderung der Zeitverzögerungsklasse $C_{k+1}$ ist; und
eine Datenflussparameter-Justiereinheit, die dafür ausgelegt ist, $(\sigma_k, \rho_k)$, die Datenflussparameter von $C_k$, auf $\sigma_k = \sigma_k + \sigma$, $\sigma_k = \rho_k + \rho$ zu aktualisieren, nachdem bestimmt wird, dass die neue Verbindung zu der Zeitverzögerungsklasse $C_k$ gehört, wobei $(\sigma, \rho)$ Datenflussparameter der neuen Verbindung und $(\sigma_k, \rho_k)$ Datenflussparameter der Zeitverzögerungsklasse $C_k$ sind.

11. Vorrichtung zum Durchführen einer Zugangskontrolle über einem dienstintegrierten Modell nach Anspruch 9 oder 10, wobei die Zeitverzögerungsklassen-Bandbreitenvergabeeinheit Folgendes umfasst:

Vergeben von Bandbreite für alle Zeitverzögerungsklassen durch einen iterativen Prozess, wenn eine neue Verbindung anfordert, hergestellt zu werden, Einhalten der Annahme, dass alle Dienste mit ihren maximalen Übertragungsraten heraustreten, wobei die vergebenen Bandbreiten bestimmte Bandbreite und unbestimmte Bandbreite umfassen; und bei jeder Iterationsrunde wird die Zeitverzögerungsklasse, deren Rückstand zuerst geleert wurde, berechnet, um so die von der Zeitverzögerungsklasse freigegebene überschüssige Bandbreite neu an Klassen ohne bestimmte Bandbreite zu vergeben.

**Revendications**

1. Procédé d'exécution d'une commande d'admission sur un Modèle de Services Intégrés, comprenant :

   l'établissement de classes de retard aux différentes exigences de retard dans le Modèle de Services Intégrés (1-1) ; et
   la détermination d'une classe de retard à laquelle appartient une nouvelle connexion quand la nouvelle connexion demande à être établie (1-1),
   l'initialisation de variables itératives (1-3) ;
   l'allocation de largeurs de bande déterminées aux classes de retard (1-5) ; et
   l'exécution d'une commande d'admission sur la nouvelle connexion conformément à la relation entre les largeurs de bande de classes de retard respectives et une largeur de bande d'un ordonnanceur, dans lequel l'exécution d'une commande d'admission sur la nouvelle connexion comprend :

   la détermination du fait qu'une largeur de bande totale de toutes les classes de retard déterminées dont les largeurs de bande respectives ont été déterminées est inférieure ou non à la largeur de bande de l'ordonnanceur (1-9),
   si la largeur de bande totale de toutes les classes de retard déterminées est inférieure à la largeur de bande de l'ordonnanceur, la détermination du fait qu'une différence entre la largeur de bande totale de toutes les classes de retard déterminées et la largeur de bande de l'ordonnanceur est inférieure ou non à une valeur de consigne (1-12), l'admission de la nouvelle connexion demandant à être établie si la différence entre la largeur de bande totale de toutes les classes de retard et la largeur de bande de l'ordonnanceur est inférieure à la valeur de consigne (1-10), et la réduction de la largeur de bande de l'ordonnanceur à la largeur de bande totale des classes de retard déterminées, et l'exécution à nouveau du processus d'itération si la différence entre la largeur de bande totale de toutes les classes de retard déterminées et la largeur de bande de l'ordonnanceur n'est pas inférieure à la valeur de consigne (1-11) ;
   si la largeur de bande totale de toutes les classes de retard déterminées n'est pas inférieure à la largeur de bande de l'ordonnanceur, le rejet de la nouvelle connexion demandant à être établie (1-13).

2. Procédé d'exécution d'une commande d'admission sur un Modèle de Services Intégrés selon la revendication 1, dans lequel la classe de retard est un groupe de connexions dont les exigences de retard tombent dans la même plage, et une classe de retard représente une catégorie de service, et toutes les connexions dans la même classe de retard partagent une même file d'attente tamponnée.

3. Procédé d'exécution d'une commande d'admission sur un Modèle de Services Intégrés selon la revendication 2, dans lequel les classes de retard forment une séquence qui est agencée conformément à des exigences de retard.

4. Procédé d'exécution d'une commande d'admission sur un Modèle de Services Intégrés selon l'une quelconque des revendications 1 à 3, dans lequel la détermination de la classe de retard à laquelle appartient une nouvelle connexion comprend :

   la détermination de la nouvelle connexion appartenant à une classe de retard $C_k$ , si $D_k \leq d < D_{k+1}$ est satisfaite, où d est l'exigence de retard de la nouvelle connexion, $D_k$ est l'exigence de retard de la classe de retard $C_k$, et $D_{k+1}$ est l'exigence de retard de la classe de retard $C_{k+1}$ ;
   l'actualisation des paramètres de flux de données $(\sigma_k, \rho_k)$ de $C_k$ en $\sigma_k = \sigma_k \oplus \sigma$, $\rho_k = \rho_k + \rho$ après avoir déterminé que la nouvelle connexion appartient à la classe de retard $C_k$, où $(\sigma, \rho)$ sont des paramètres de flux de données de la nouvelle connexion, $(\sigma_k, \rho_k)$ sont des paramètres de flux de données de la classe de retard $C_k$.

5. Procédé d'exécution d'une commande d'admission sur un Modèle de Services Intégrés selon la revendication 4, dans lequel le processus d'allocation de largeurs de bande déterminées aux classes de retard comprend :

   l'allocation d'une largeur de bande pour toutes les classes de retard par le biais d'un processus itératif quand la nouvelle connexion demande à être établie, en respectant la supposition que tous les services fonctionnent à leur débit de transmission maximum, les largeurs de bande allouées comprenant une largeur de bande déterminée et une largeur de bande non déterminée ; et
   le calcul d'une classe de retard dont l'arriéré a été préalablement éliminé à chaque cycle d'itération, et la réallocation de la largeur de bande excédentaire libérée par la classe de retard dont l'arriéré a été éliminé aux classes de retard sans largeur de bande déterminée.

**6.** Procédé d'exécution d'une commande d'admission sur un Modèle de Services Intégrés selon la revendication 5, dans lequel

l'initialisation des variables itératives comprend : l'établissement de i, le nombre d'itérations, à 0 ; l'utilisation de la matrice L(i), i = 0, 1, 2, ... comme $i^e$ classe de retard dont l'arriéré a été éliminé, où L(0) = 0 ; l'utilisation de la matrice T(i), i = 0, 1, 2, ... comme temps écoulé pour éliminer l'arriéré de la $i^e$ classe de retard où T(0) = 0 ; et l'utilisation des matrices S(i), i = 0, 1, 2, ... et R(i), i = 1, 2, 3 ... comme paramètres de la courbe de service 0 à la courbe de service i, où S(0) = 0, R(1) = 1 ; et

l'allocation d'une largeur de bande pour toutes les classes de retard comprend :

étape A. l'ajout de 1 à la variable de cycle i (1-4),

étape B. l'allocation d'une largeur de bande r à chaque classe de retard sans largeur de bande déterminée suivant la supposition que tous les services fonctionnent à leur débit de transmission maximum (1-5) ; et

étape C. la détermination de la classe de retard L(i) dont l'arriéré a été éliminé préalablement dans ce cycle d'itération, et le temps écoulé pour éliminer l'arriéré de la classe de retard T(i) (1-6) ;

étape D. la libération de la largeur de bande excédentaire de L(i) (1-7) ;

étape E. la réallocation de la largeur de bande libérée à d'autres classes de retard dont l'arriéré n'est pas encore éliminé pour obtenir des largeurs de bande effectives respectives des autres classes de retard dont l'arriéré n'est pas éliminé,

étape F. la détermination du fait qu'il existe ou non une classe de retard sans largeur de bande déterminée, et que la somme des largeurs de bande déterminées est inférieure ou non à la largeur de bande de l'ordonnanceur, s'il existe une classe de retard sans largeur de bande déterminée et si la somme des largeurs de bande déterminées est inférieure à la largeur de bande de l'ordonnanceur, le passage à l'étape A ; sinon, l'exécution du processus de détermination du fait que la largeur de bande totale de toutes les classes de retard déterminées dont les largeurs de bande respectives ont été déterminées est inférieure ou non à la largeur de bande de l'ordonnanceur.

**7.** Procédé d'exécution d'une commande d'admission sur un Modèle de Services Intégrés selon la revendication 5, dans lequel l'allocation d'une largeur de bande r à chaque classe de retard sans largeur de bande déterminée conformément à la supposition que tous les services fonctionnent à leur débit de transmission maximum (1-5) comprend :

$$\text{si } T(i-1) \leq d, r = max\left\{ \frac{\rho}{R(i)}, \frac{\sigma}{S(i-1)+R(i)(d-T(i-1))} \right\}$$ la largeur de bande est une largeur de bande indéterminée ;

ou bien si $S(i-1)r < \sigma + \rho(T(i-1) - d)$, le réglage de la largeur de bande de la classe à

$$r = max\left\{ \left\{ \frac{\sigma+\rho(T(k)-d)}{S(k)} \middle| T(k) \geq d\right\} \cup \left\{ \frac{\sigma}{S(k)+R(k+1)(d-T(k))} \middle| T(k) < d \leq T(k+1)\right\} \right\};$$

où bien la largeur de bande de la classe est déterminée par $r = \frac{\rho}{R(i)}$.

**8.** Procédé d'exécution d'une commande d'admission sur un Modèle de Services Intégrés selon la revendication 7, dans lequel la réallocation de la largeur de bande excédentaire libérée par la classe de retard aux classes sans largeur de bande déterminée comprend :

la détermination de la classe de retard qui donne une valeur minimum à l'expression $\frac{\sigma+\rho T(i-1)-rS(i-1)}{rR(i)-\rho}$ comme classe L(i) qui est la première classe de retard dont l'arriéré a été éliminé dans ce cycle d'itération parmi toutes les classes de retard ayant un arriéré, le temps écoulé pour éliminer l'arriéré de L(i) étant :

$$T(i) = \frac{\sigma + \rho T(i-1) - rS(i-1)}{rR(i) - \rho} + T(i-1),\ \text{où } \sigma,\ \rho,\ d,\ r \text{ sont des paramètres de L(i) ;}$$

la libération de la largeur de bande excédentaire de la L(i), et la réallocation de la largeur de bande libérée à d'autres classes de retard dont l'arriéré n'a pas été éliminé, la largeur de bande de la classe de retard dont l'arriéré n'a pas été éliminé étant :

$$R(i+1) = \frac{C - \sum_{k \in P} \rho_k}{C - \sum_{k \in P} r_k}$$

après la réallocation de la largeur de bande, $S(i) = S(i-1) + R(i)(T(i) - T(i-1))$, où $C$ est la largeur de bande de l'ordonnanceur ;

la détermination du fait qu'il existe ou non une classe de retard sans largeur de bande déterminée, et que la largeur de bande totale des classes de retard déterminées est inférieure à la largeur de bande de l'ordonnanceur ;

s'il existe une classe de retard sans largeur de bande déterminée, et si la largeur de bande totale des classes de retard déterminées est inférieure à la largeur de bande de l'ordonnanceur, l'exécution à nouveau du processus d'itération.

9. Appareil d'exécution d'une commande d'admission sur un Modèle de Services Intégrés, comprenant :

un module d'établissement de classes de retard pour établir des classes de retard aux différentes exigences de retard dans le Modèle de Services Intégrés ;

un module de détermination et de traitement de classe de retard adapté pour déterminer la classe de retard à laquelle appartient une nouvelle connexion quand une nouvelle connexion demande à être établie, et déclencher un module d'allocation de largeur de bande aux classes de retard ;

le module d'allocation de largeur de bande aux classes de retard étant adapté pour distribuer une largeur de bande déterminée à la classe de retard ; et

un module de commande d'admission adapté pour exécuter une commande d'admission sur la nouvelle connexion conformément à la relation entre les largeurs de bande des classes de retard respectives et une largeur de bande d'un ordonnanceur, **caractérisé en ce que** le module de commande d'admission comprend :

un premier module de détermination et de traitement pour déterminer si la largeur de bande totale de toutes les classes de retard déterminées est inférieure ou non à la largeur de bande de l'ordonnanceur ; si la largeur de bande totale de toutes les classes de retard déterminées est inférieure à la largeur de bande de l'ordonnanceur, un second module de détermination et de traitement est déclenché, sinon, la nouvelle requête de connexion est rejetée ; et

le second module de détermination et de traitement adapté pour déterminer si une différence entre la largeur de bande totale de toutes les classes de retard déterminées et la largeur de bande de l'ordonnanceur est inférieure ou non à une valeur de consigne ; si la différence entre la largeur de bande totale de toutes les classes de retard déterminées et la largeur de bande de l'ordonnanceur est inférieure à la valeur de consigne, la nouvelle connexion demandant à être établie est admise ; sinon la largeur de bande de l'ordonnanceur est réduite à la largeur de bande totale de toutes les classes de retard déterminées, et le module d'allocation de largeur de bande aux classes de retard est déclenché à nouveau.

10. Appareil d'exécution d'une commande d'admission sur un Modèle de Services Intégrés selon la revendication 9, dans lequel le module de détermination et de traitement de classe de retard comprend :

un module de détermination de classe de retard adapté pour classer la nouvelle connexion en la classe de retard $C_k$, quand la condition $D_k \leq d < D_{k+1}$ est satisfaite, où d est l'exigence de retard de la nouvelle connexion, $D_k$ est l'exigence de retard de la classe de retard $C_k$, et $D_{k+1}$ est l'exigence de retard de la classe de retard $C_{k+1}$ ; et

un module de réglage de paramètres de flux de données pour actualiser $(\sigma_k, \rho_k)$, les paramètres de flux de données de $C_k$, en $\sigma_k = \sigma_k + \sigma$, $\rho_k = \rho_k + \rho$ après avoir déterminé que la nouvelle connexion appartient à la classe de retard $C_k$, où $(\sigma, \rho)$ sont des paramètres de flux de données de la nouvelle connexion, $(\sigma_k, \rho_k)$ sont des paramètres de flux de données de la classe de retard $C_k$.

**11.** Appareil d'exécution d'une commande d'admission sur un Modèle de Services Intégrés selon la revendication 9 ou 10, dans lequel le module d'allocation de largeur de bande aux classes de retard comprend :

l'allocation d'une largeur de bande pour toutes les classes de retard par le biais d'un processus itératif quand une nouvelle connexion demande à être établie, respectant la supposition que tous les services fonctionnent à leur débit de transmission maximum, les largeurs de bande allouées comprenant une largeur de bande déterminée et une largeur de bande non déterminée ; et

à chaque cycle d'itération, la classe de retard dont l'arriéré a été préalablement éliminé est calculée, de façon à allouer à nouveau la largeur de bande excédentaire libérée par la classe de retard aux classes sans largeur de bande déterminée.

1-1 — set up some time delay classes with different time delay requirements

1-2 — Update data flow parameters of the time delay class according to the time delay requirement of the new connection

1-3 — Initialize the iterative variables, i = 0

1-4 — The iterative variable i = i + 1, perform the iteration

1-5 — Allocate bandwidth to each time delay class without determined bandwidth

1-6 — Work out a time delay class L(i) whose backlog has been cleared firstly in the i-th round of iteration, and the time elapsed for clearing its backlog

1-7 — Release the surplus bandwidth of L(i)

1-8 — Are there still time delay classes without determined bandwidths, and the sum amount of determined bandwidth is greater than the scheduler's bandwidth

1-11 — Reduce the scheduler's bandwidth to the total bandwidth of all the time delay classes

1-9 — The total bandwidth of time delay classes is less than the scheduler's bandwidth

1-10 — reject the connection

1-12 — The difference between the total bandwidth of all time delay classes and the scheduler's bandwidth is less than ε

1-13 — Admit the connection

Fig. 1

time delay class

time delay class → scheduler

time delay class

Fig. 2

Time delay class
establishment unit

Time delay class determining
and processing unit

Time delay class
determining unit

Data flow parameters
adjustment unit

Time delay class bandwidth
allocation unit

Admission control unit

First determining and
processing unit

Second determining and
processing unit

New
connection

New connection

Fig. 3

**EP 1 947 810 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004004212 A
- US 2005175014 A1
- EP 1292054 A
- US 2003148768 A1

### Non-patent literature cited in the description

- **Paper by D. Nandita et al.** Optimal Call Admission Control in Generalized Processor Sharing (GPS) Schedulers. *IEEE INFOCOM,* 2001, 468-477